# EUROPEAN PATENT SPECIFICATION

(11) **EP 3 789 740 B1**
(45) Date of publication and mention of the grant of the patent: **14.02.2024**
(21) Application number: 19306074.6
(22) Date of filing: 06.09.2019
(51) Int. Cl.: G01D 11/30, G01K 1/14, G01D 11/24, B60S 1/08

(54) **SENSING DEVICE FOR A WINDSHIELD**
SENSORVORRICHTUNG FÜR EINE WINDSCHUTZSCHEIBE
DISPOSITIF DE DÉTECTION DESTINÉ À UN PARE-BRISE

(43) Date of publication of application: 10.03.2021
(73) Proprietor: TE Connectivity Sensors France, 31027 Toulouse Cedex 3 (FR)
(72) Inventor: PAYZAL, Sylvain, 32120 Sarrant (FR); BIGOU, Nicolas, 31200 Toulouse (FR); LEGER, Vincent, 31200 Toulouse (FR); MIRASSOU, David, 31200 Toulouse (FR); TEINTURIER, Leny, 31560 Calmont (FR)
(74) Representative: Grünecker Patent- und Rechtsanwälte PartG mbB

(56) References cited:
- EP-A2- 2 749 855
- DE-A1-102011 122 456
- US-A1- 2019 101 420
- US-B2- 8 051 707

## Description

The present invention relates to a sensing device for a windshield, in particular for motor vehicles. Temperature sensors, humidity sensors, optical sensors or a combination thereof are known to be used in windshield sensing devices for the purpose of automatically adapting the heating, ventilation, and air conditioning (so called HVAC) or for automatically switching on the wiper.

As an example, a windshield temperature sensing device is commonly used for preventing fogging conditions. Windshield mounted temperature and/or humidity sensors can further be combined with light sensors or solar sensors.

For allowing a precise and reliable monitoring of the temperature and/or the moisture, the sensor of the sensing device has to be kept in constant contact with the surface of the windshield surface during the whole lifetime of the vehicle, and thus withstand mechanical shock and vibration. Thus, the sensing device needs to be securely attached to the windshield.

A way to provide such a contact of the sensor with the windshield of the vehicle is disclosed in US 7,770,433 B2. It illustrates a sensing device comprising a housing adapted to hold a humidity sensor towards the windscreen of a vehicle or any other type of window. A flexible printed circuit board is arranged between the humidity sensor and the windscreen and provides a connection between the humidity sensor and further circuitry of the detector. The humidity sensor is located under a cap, which is engaged by a glider member. A spring pushes the glider member towards the windscreen.

Another approach is shown in DE 10 2006 060 548 A1, where a rain sensor for motor vehicles comprises a temperature and humidity module located on a flex circuit board, which is pressed against the vehicle window by means of a spring or by means of the elastic restoring force of the flex circuit board against the vehicle window.

In order to obtain reliable measurements for the sensing device, the temperature and humidity module need to be located at a distance of the sensor unit in order to reduce the influence of the sensor unit on the measurements of the temperature and humidity module. Such sensor device configuration results in a complex assembly of the sensor unit comprising with a temperature and humidity module.

Other sensor device assembly are shown for example in US,8,051,707 B2, EP 2749855 A2 and US 2019/0101420 A1.

Furthermore, due to presence of a plurality of different parts, the assembly of the sensing device is time consuming.

Hence, it is an object of the present invention to propose a design that allows a simple and cost-effective overall assembly process of a sensing device for a windshield.

The object of the present invention is solved by a sensing device for a windshield according to claim 1. The flexible curved portion of the interconnecting means can be made with a combination of soldered and mechanical connections with the housing. Furthermore, in the sensing device according to the invention, the flexible curved portion can be pre-fabricated with the printed circuit board out of line of the assembly process of the sensing device, and therefore results in a simplified overall assembly of the sensing device. The fact that the flexible curved portion can be pre-assembled with the printed board circuit results in a simple component that can be connected in a simple manner within the housing of the sensing device to form the sensing device.

In a variant of the invention, the housing can comprise an interconnecting means holding wall wherein the wall comprises a recess through which the third portion of the interconnecting means extends such that the second end portion is positioned on the one side of the recess and the remainder of the third portion of the interconnecting means is positioned on the other side of the recess.

In a variant of the invention, the interconnecting means holding wall of the housing can furthermore comprise a groove, in particular a V-shaped groove, extending essentially sideward and along the holding wall to the recess for receiving the second end portion of the interconnecting means. The connection between the second end portion of the interconnecting means and the housing is a form-fit connection. Thanks to the complementarity of form, the connection is reliable and simple.

In a variant of the invention, the bottom of the groove can receive the edge of the second end portion connection to the third portion of the interconnecting means. Thereby, the second end portion of the flexible interconnect device is kept in place in the groove. Such configuration prevents a lateral movement of the flexible curved portion within the housing, in the direction towards the printed circuit board and further prevents a vertical movement of the flexible curved portion within the housing, in the direction of the windshield, when the sensing device is applied to a windshield.

In a variant of the invention, the bottom of the groove comprises an opening via which the third portion of the curved portion formed by the interconnecting means extends beyond the housing. The flexible curved portion of the interconnecting means can then be formed when the cover is set onto the housing as the second end portion of the interconnecting means is fixed in the groove while the remainder of the interconnecting means can extend towards the printed circuit board to form the connection of the first end portion with the printed circuit board.

In a variant of the invention, the recess can be a slit that extends through the entire height of the wall and essentially perpendicular to the surface side of the housing configured to be put into contact with a windshield. In a variant of the invention, the slit can be present only in one flank of the V-shaped groove. This ensures a simple realization of the recess.

In a variant of the invention, the recess can further comprise closing means for at least partially closing the recess such that the flexible curved portion remains beyond the outer surface of the housing. By at least closing the recess, the recess closing mean actually abuts against the flexible curved portion at one point of the flexible curved portion, making force to keep the flexible curved portion in position within the recess, thereby preventing a lateral or vertical movement of the flexible curved portion within the housing.

In a variant of the invention, the sensing device can further comprise guiding means for forcing the flexible curved portion beyond the outer surface of the housing, said guiding means are positioned between the recess closing means and the printed circuit board. The flexible curved portion is kept in position within the housing by abutment with the cover, so that a lateral or vertical movement of the flexible curved portion within the housing is prevented.

In a variant of the invention, the sensing device can further comprise a cover closing the housing, and realizing a form-fit connection with the housing in a second direction. A form-fit connection allows a reliable connection between the cover and the housing. Furthermore, a form-fit connection is easy to realize e.g. by clicking it onto the housing or by screwing it to the housing.

In a variant of the invention, the recess closing means and/or the guiding means can be part of the cover closing the housing from the side opposite to the side in contact with the windshield when mounted.

In a variant of the invention, the recess closing means can be rounded at its extremity. The rounded extremity of the recess closing means abut against the flexible curved portion and thus do not create damages at this contact point of the flexible curved portion.

In a variant of the invention, the guiding means can also be part of the cover. In a variant of the invention, the extremity of the guiding means can be rounded. The rounded extremity of the guiding means abut against the flexible curved portion and thus do not create damages at this contact point of the flexible curved portion.

In a variant of the invention, the housing and/or the cover can further comprise a plurality of protruding portions to shape the flexible interconnecting means into a plurality of flexible curved portions. The plurality of flexible curved portion results in an enhanced elastic restoring force of the flexible curved portion in contact with the windshield and thus, a better and more secure contact between the windshield and the at least one non-optical sensor mounted in the flexible curved portion is obtained.

In a variant of the invention, the housing can comprise a protruding section next to the opening of the housing facing the guiding walls of the cover to sandwich the interconnecting means between the housing and the cover. In a variant, at least one flexible curved portion can be formed between the opening of the housing and the connection of the first end portion of the interconnecting means with the printed circuit board. The flexible curved portion formed when the cover is placed on top of the housing is well maintained in its position on both sides of the opining of the housing.

In a variant of the invention, the interconnecting means can have a shape of a succession of convex and concave curved portions.

In a variant of the invention, the area of the connection between the printed circuit board and the first end portion of the interconnecting means can extend perpendicular to the surface side of the housing configured to be put into contact with a windshield. In a variant of the invention, a volume for receiving at least one sensor can be located between the recess closing means and the guiding means. Such volume corresponds to the overlap opening created when the cover is put in position over the housing. Thus, the at least one sensor on the flexible curved portion can be located in the opening of the sensing device so that when the sensing device is applied to the windshield, the flexible curved portion is located between the at least one sensor and the windshield.

The invention may be understood by reference to the following description taken in conjunction with the accompanying figures, in which reference numerals identify features of the invention.
Figure 1a shows a side view of a sensing device according to a first embodiment of the invention.
Figure 1b shows a three dimensional view of the sensing device according to the first embodiment of the invention.
Figure 2a shows a three-dimensional view of the housing and the interconnection means of the sensing device according to the invention, before the interconnecting means is shaped into a flexible curved portion and before the sensing cover is put on the housing of the sensing device.
Figure 2b shows a three-dimensional view of the housing and the interconnecting means of the sensing device according to the invention, after the flexible curved portion is formed but before the cover is put on.
Figure 3 shows a three-dimensional view of the sensing device according to the first embodiment of the invention, with the sensing cover and the sensing housing being separated from each other.
Figure 4a shows the end portion of the interconnecting means according to the first embodiment of the invention.
Figure 4b shows the end portion of the interconnecting means according to a variant of the first embodiment of the invention.
Figure 4c shows the end portion of the interconnecting means according to a second variant of the first embodiment of the invention.
Figure 5 shows a cut of a three-dimensional side view of the sensing device according to the second embodiment of the invention.
Figure 6a shows a cut of a three-dimensional side view of the housing and the interconnecting means of the sensing device according to the second embodiment of the invention, before the interconnecting means is shaped into a plurality of flexible curved portions.
Figure 6b shows a cut of a three dimensional side view of the housing and the interconnecting means of the sensing device according to the second embodiment of the invention, during the first step of forming the flexible curved portion of the interconnecting means.
Figure 6c shows a three-dimensional side view of the housing and the interconnecting means of the sensing device according to the second embodiment of the invention, during the second step of forming the flexible curved portion of the interconnecting means.

The invention will now be described in more detail using advantageous embodiments in an exemplary manner and with reference to the drawings. The described embodiments are merely possible configurations and it should be kept in mind that the individual characteristics as described above can be provided independently of one another or can be omitted altogether during the implementation of the present invention.

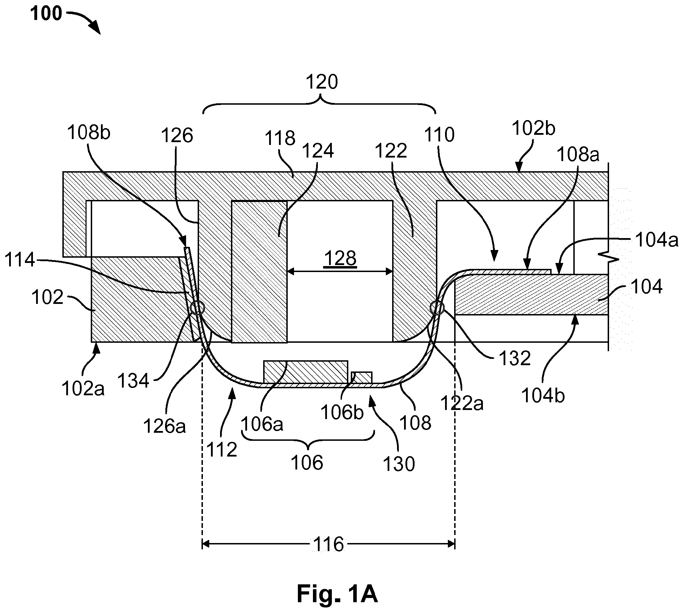

Figure 1a shows a side view of a sensing device according to a first embodiment of the invention.

The sensing device 100 comprises a housing 102 comprising a printed circuit board 104, at least one sensor 106 and an interconnecting means 108.

The printed circuit board 104 is located within the housing 102 of the sensing device 100.

The printed circuit board 102 can comprise sensor controlling means and at least one optical sensor (not shown). The at least one optical sensor can be a rain sensor or a light sensor.

The interconnecting means 108 can be a foil conductor or a flexible printed circuit board. It comprises a flexible carrier and one or more conductor lines. Typically, the carrier is made of a flexible plastic material.

The interconnecting means 108 is directly connected to the printed circuit board 104 by its first end portion 108a. In this embodiment, the direct connection 110 between the first end portion 108a of the interconnecting means 108 and the printed circuit board 104 is realized via a soldered connection 110. The soldered connection 110 is provided on the top surface 104a of the printed circuit board 104 on which the sensor controlling means and the at least one optical sensor are provided (not shown). The bottom surface 104b of the printed board 104 is the surface side facing the windshield of the vehicle when the sensing device is in its mount state. In a variant, the interconnecting means 108 could be attached to the bottom surface 104b of the printed circuit board 104.

Using the direct connection 110, the printed circuit board 104 and the interconnecting means 108 can be pre-mount with one another before assembly into the housing 102 of the sensing device 100. Using soldering, a mechanical but also the electrical connection between the conductor lines of the interconnecting means 108 and the conductor lines of the printed circuit board 104 can be realized in one step. The interconnecting means 108 and the printed circuit board 104 can be mounted as only one single component into the sensor housing 102 in a simplified manner compared to the state of the art sensing devices, which had to assemble a plurality of parts. Instead of soldering or in addition, the interconnecting means 108 could also be glued to the printed circuit board 104.

In this embodiment, the at least one sensor 106 is a non-optical sensor. The non-optical sensor 106 can be a temperature sensor and/or a humidity sensor. In this embodiment, the sensing device 100 comprises a combination of two non-optical sensors, a temperature sensor 106a and a humidity sensor 106b.

The at least one sensor 106 is located on the interconnecting means 108 so that the interconnecting means 108 electrically connects the at least one sensor 106 to the sensor controlling means comprised in the printed circuit board 102.

The interconnecting means 108 is shaped into a flexible curved portion 112. The curved portion shape is realized by the connection of the first end portion 108a to the printed circuit board 104 and by bending it such that its second end portion 108b pushes against a wall 114 of the housing 102 to hold the interconnecting means 108 in a force fit and/or form fit connection. Indeed, due the flexible restoring force, the second end portion 108b pushes the interconnecting means 108 against the holding wall 114 thereby forming the force and form fit connection.

The flexible curved portion extends beyond the outer surface 102a of the housing 102 through an opening 116 in the housing 102. The surface 102a corresponds to the side of the housing 102 which is in contact with the windshield when the sensor 100 is mounted.

The sensing device 100 further comprises a cover 118 for closing the housing 102 on the side 102b opposite the side 102a which will be towards the windscreen in the mount state. The cover 118 realizes a form-fit connection, e.g. using a snap fit or screwed with the housing 102. The cover 118 comprises a protruding portion 120 comprising two guiding means 122 and 124 and a recess closing means 126, see also further below for a more detailed description. In the mount state, the protruding portion 120 extends into the space provided by the opening 116 in the housing 102. In this embodiment, the recess closing means 126 and the guiding means 124 form one element. The guiding means 122 and the recess closing means 126 are separated from each other to define a volume 128 for receiving the at least one sensor 106 when the device 100 is mounted.

In the mount state, the apex section 130 of the flexible curved portion 112 carrying the sensor 106 on the side towards the housing 102 is facing the volume 128 but remains outside the housing 102.

The guiding wall 122 of the protruding section 120 of the cover 118 abuts against the flexible curved portion 112 formed by the interconnecting means 108 at contact surface 132 of the flexible curved portion 112. The recess closing means 126 also abuts against the flexible curved portion 112 at contact surface 134.

The guiding means 122 and the recess closing means 126 have a rounded shape at their extremities 122a and 126a respectively. The round sides 122c, 126c are facing the interconnecting means 108. The rounded extremities 122a, 126a of the guiding means 122 and of the recess closing means 126 respectively abut against the flexible curved portion 112 and thus, do not create damages at these contact surfaces 132, 134 of the flexible curved portion 112.

The abutment between the flexible curved portion 112 and the cover 118 of the sensing device 100 results in a force being applied to the flexible curved portion 112 so that the flexible curved portion 112 stays fixed in its position in the housing 102 of the sensing device 100. The guiding wall 122 and the recess closing means 126 thus prevent a lateral and/or vertical movement of the flexible curved portion 112 within the housing 102.

Furthermore, the cover 118 is positioned above the second end portion 108b of the flexible curved portion 112 thereby blocking the flexible curved portion 112 against an upward movement, meaning a movement of the flexible curved portion 112 in the opposite direction to where the windshield is in contact with the sensor device 100 in the mount state.

Thus, according to the invention, the flexible curved portion 112 is locked in position between the housing 102 and the cover 118 of the sensing device 100.

When the sensing device is put in contact with a windshield, the flexible curved portion 112 is pressed onto the windshield via an elastic restoring force so that the at least one non-optical sensor 106 located at the apex 130 of the flexible curved portion 112 is in contact with the windshield.

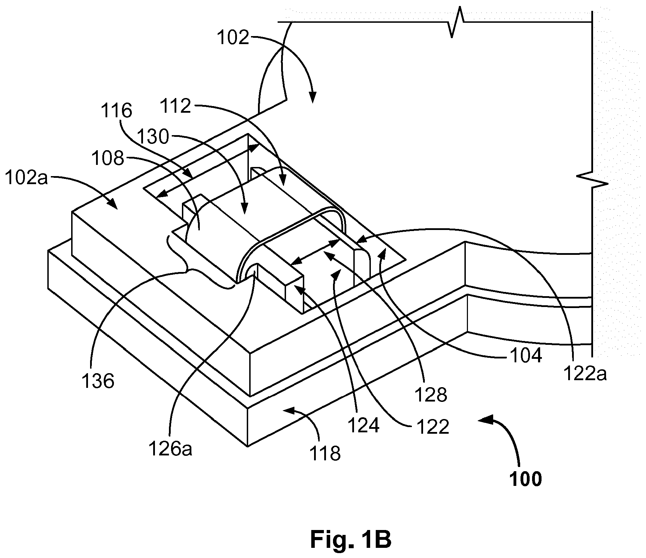

Figure 1b shows a three dimensional view of the sensing device 100 according to the first embodiment of the invention. Elements with reference numerals already used in the description of Figure 1a will not be described in detail again but reference is made thereto.

The three dimensional view of the sensing device 100 corresponds to a bottom view, that is looking at the outer surface side 102a of the housing 102 of the sensing device 100 which would be in contact with the windshield when the sensing device 102 is mount. Like in Figure 1a, the housing 102 is closed by the cover 118. Through the opening 116, the printed circuit board 104 is visible.

Figure 1b further more illustrates the apex portion 130 of the interconnecting means 108 in its flexible curved portion shape 112 and that it extends through the opening 116 in the housing 102 and beyond the outer surface side 102a of the housing 102.

Figure 1b furthermore illustrates the guiding means 122 with its rounded extremity 122a and the second guiding means 124. In addition, the rounded extremity 126a of the recess closing means 126 is visible.

In the region of the rounded extremity 126a, the housing 102 has an opening 136 via which the interconnecting means 108 enters the housing 102.

The first and second guiding means 122, 124 and the recess closing means 126 define the volume 128 as explained above.

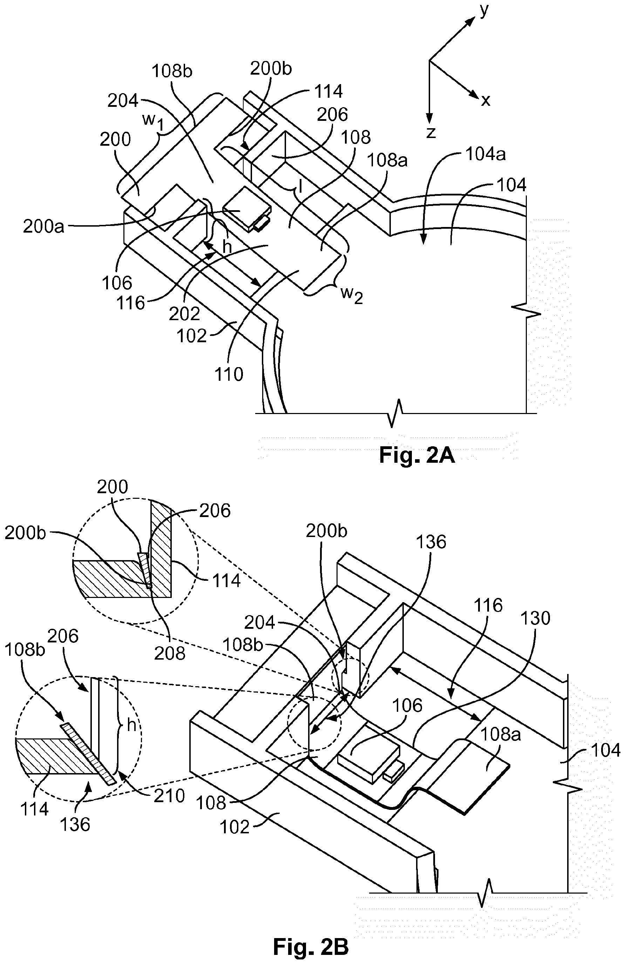

Figure 2a shows a three-dimensional view of the sensing device 100 according to the first embodiment before the flexible curved portion shape is formed by the interconnecting means 108 and before the cover is put on the housing 102. Elements with reference numerals already used in the description of Figures 1a and 1b will not be described in detail again but reference is made thereto.

Figure 2a shows the printed circuit board 104 positioned inside the housing 102 and the interconnecting means 108 attached to it at its first end portion 108a via the soldered section 110. The first end portion 108a is attached to the surface side 102a that faces away from the windshield (in the mount state of the sensing device). Figure 2a furthermore illustrates the opening 116 in the housing 102.

The interconnecting means 108 comprises a first end portion 108a, a second end portion 108b and a third portion 108c. The third portion 108c is located between the second end portion 108b and the sensor 106. The third portion 108c comprises at least one cut out.

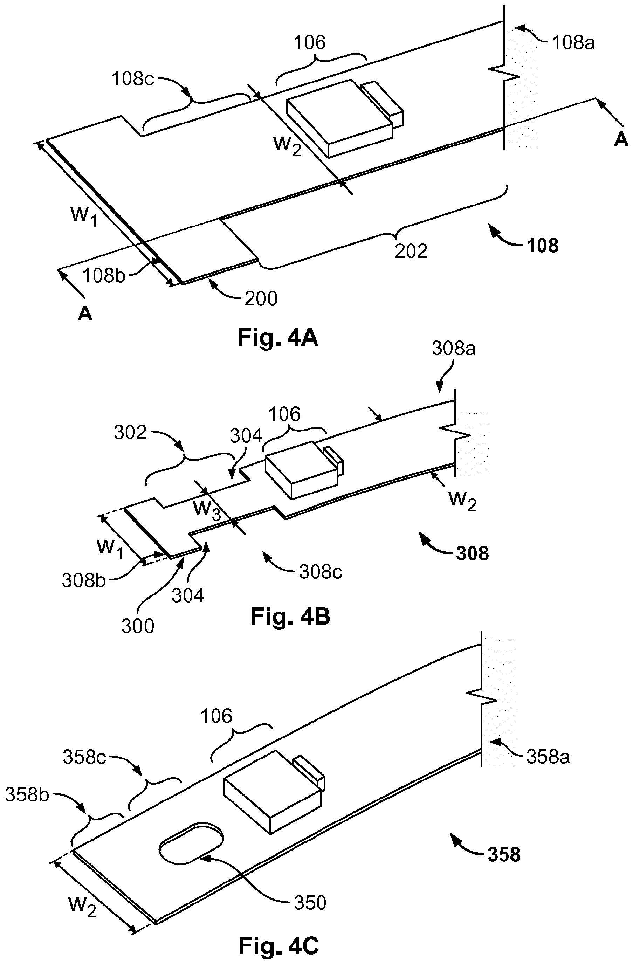

In the embodiment shown in fig. 2a, the second end portion 108b and the third portion 108c together form a T-shape, which is also shown in detail in figure 4a. The T-shape form comprises a T-bar 200 extending perpendicular to a trunk section 202 of the interconnecting means 108. In this embodiment, the second end portion 108b corresponds to the T-bar 200 and the third portion 108c to the trunk section 202. The T-bar 200 has a width *w₁* which is wider than the width *w₂* of the trunk section 202 of the interconnecting means 108. The trunk section 202 of the interconnecting means 108 has a length *l* and comprises the third portion 108c and the first end portion 108a. The at least one sensor 106 is located on the interconnecting means 108 between the third portion 108c and the first end portion 108a of the interconnecting means 108, in the trunk section 202 of the interconnecting means 108.

The interconnecting means holding wall 114 of the housing 102 comprises a recess 204 in its center region. The recess 204 has at least the width *w₂* of the trunk section 252 of the interconnecting means 208 as its width in the y direction. The recess 204 extends along the entire height *h* of the wall of the housing 102 in the z direction. The recess 138 extends essentially perpendicular to the surface side of the housing 102 configured to be put into contact with a windshield thus in the zy plane.

The interconnecting means 108 is positioned such that it extends across the recess 204 so that its T-bar 200 and thus its second end portion is located on one side of the recess 204 and the first end portion 108a is located on the other side of the recess 204.

The interconnecting means holding wall 114 of the housing 102 further comprises a groove 206. The groove 206 has a V-shaped or U shape. The groove 206 extends essentially sideward with respect to both sides of the recess 204 and on the side of the holding wall 114 away from the PCB board 104 for receiving the T-bar 250 of the interconnecting means 208. Thus, it extends along the zy plane.

The groove 206 serves to receive the edges 200a and 200b of the T-bar 200 in the assembled state of the sensing device like will be described with respect to Figure 2b.

Figure 2b shows the three-dimensional view of the sensing device 100 according to the first embodiment shown in Figure 2a but after the flexible curved portion shape has been formed and still before the cover is put on the housing 102. Elements with reference numerals already used in the description of Figures 1a, 1b and 2a will not be described in detail again but reference is made thereto.

Like in figure 2a, the first end portion 108a is attached to the printed circuit board 104 positioned in the housing.

In Figure 2b, the second end portion 108b of the interconnecting means 108, thus the T-bar 200 of interconnecting means 108 has been pushed into the groove 206. As can be seen in the enlarged section of Figure 2b, the T-bar 200 has been pushed into the groove 206 until its edges 200b touch the bottom 208 of the groove 206 present in the holding wall 114.

Thus, the curved portion shape 112 of the interconnecting means 108 is obtained and the apex portion 130 with the at least one sensor 106 now extends beyond the opening 116 in the housing 102.

Figure 2b also illustrates that the recess 204 has the form of a slit 210 that extends through the entire height h of the wall 114. As can be seen in the second enlargement, the slit 210 is present only in one flank of the groove 206. The slit 210 is present on the flank of the V-shaped groove 206 where the trunk section 202 of the interconnecting means 108 extends through via opening 136 so that the first end portion 108a of the interconnecting means 108 reaches the printed circuit board 104.

The second end portion 108b of the interconnecting means 108 thus realises a form-fit and/or force-fit connection with the wall 114 of the housing 102 being part of the second flank of the groove 206. The bottom 208 of the groove 206 blocks the second end portion 108b in the direction towards the windshield in the mount state.

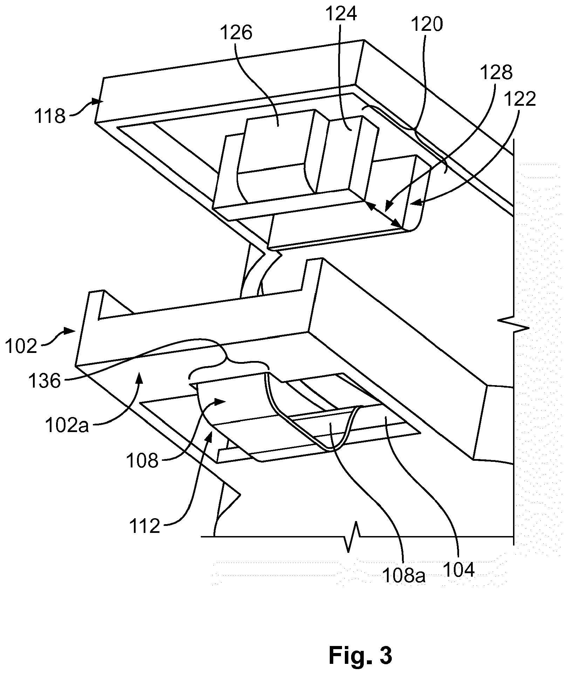

Figure 3 shows a three dimensional view of the sensing device according to the first embodiment of the invention, with the cover 118 and the housing 102 as illustrated in Figure 2b being in a non-assembled state. Elements with reference numerals already used in the description of Figures 1a, 1b, 2a and 2b will not be described in detail again but reference is made thereto.

The flexible curved portion shape 112 of the interconnecting means 108 carrying the sensor (not visible) extends through opening 116 beyond the lower surface 102a of the housing 102. The interconnecting means 108 enters the recess located in the holding wall of the housing 102 via the opening 136 of the housing 102, while on the other side of the opening 116, the connection between the first end portion 108a of the interconnecting means 108 with the printed circuit board 104 can be seen.

Figure 3 furthermore illustrates the protruding section 120 of the cover 118 with its two guiding means 122 and 124 and the recess closing means 126. The recess closing means 126 is located directly next to one of the guiding means 124 and forms one part. The volume 128 of the cover 118 is located between the guiding means 122 and the recess closing means 126.

The sensing device 100 according to the invention comprises a flexible curved portion shaped interconnecting means 108 locked in position by the housing 102 and the cover 118 of the sensing device. The flexible curved portion can easily be pre-assembled within the housing 102 of the sensing device which results in a simplified assembly process of the sensing device.

Figure 4a shows the interconnecting means 108 according to the first embodiment of the invention.

Figure 4a illustrates the T-shape form on the side of the second end portion 108b with the T-bar 200 extending perpendicular to the trunk section 202. The second end portion 108b corresponds to the T-bar 200 and the third portion 108c corresponds to a portion of the trunk section 202. The width *w₁* of the T-bar 200 is larger than the width *w₂* of the third portion 108c.

In figure 4b, a first variant of the form of the interconnecting means on the side of the second end portion is shown.

Like in the first variant, the second end portion 308b of the interconnecting means 308 corresponds to a T-bar 300 and the third portion 308c is the trunk section 302. Here, the cut outs of the third portion 308c are two recesses 304a and 304b on both lateral sides of the trunk section 302. The width *w₃* of the third portion 308c is smaller than the width *w₁* of the T-bar 300 and is the same as the width *w₁* of the trunk section 202 of figure 4a. The width *w₃* of the third portion 308c is smaller than *w₂*. The part of the interconnecting means 308 with the at least one sensor 106 then again has the same width *w₂* than the second end portion 308b

Figure 4c illustrates a second variant of the interconnecting means 358 on the side of the second end portion 358b.

Unlike the first two variants, the interconnecting means 358 has a width *w₂* essentially constant over its entire length from the first end portion (not shown) to the second end portion 358b. In this variant, the recess in the third portion 358c is a through hole 350. The through hole 350 can be in the form of an elongated slit 350. When using the second variant, the recess 204 of the interconnecting means holding wall 114 of the housing 102 needs to be adapted accordingly so that a form-fit and/or a force-fit connection takes place between the second end portion 308b of the interconnecting means 308 with a wall 114 of the housing 102 in at least one direction. Indeed, two recesses need to be provided left and right of the central V or U shaped groove 206.

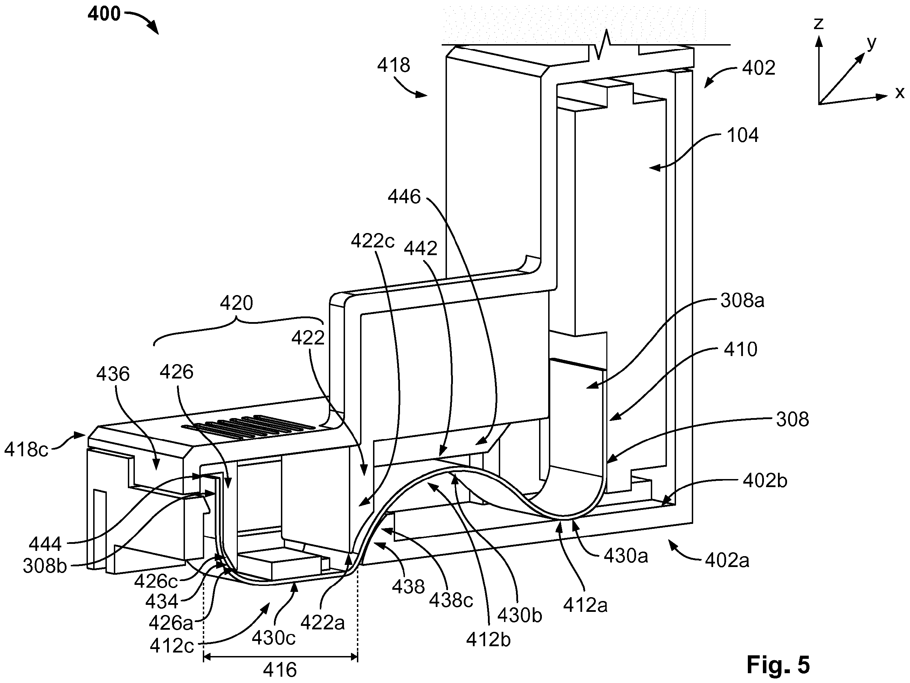

Figure 5 shows a cut of a three-dimensional side view of the sensing device according to a second embodiment of the invention. Elements with reference numerals already used in the description of the first embodiment and its variants will not be described in detail again but reference is made thereto. The second embodiment uses an interconnecting means 108 like illustrated in Figure 4a. The cut is made along the long edge of the interconnecting means 108, thus along line AA as illustrated in Figure 4a.

The housing 402 and the cover 418 essentially fulfill the same function as in the first embodiment but realized in a slightly different manner. In this embodiment, the parts are configured and arranged such that the interconnecting means 108 forms three flexible curved portions 412a, 412b and 412c.

Compared to the first embodiment, the connection 410 between the first end portion 108a and the printed circuit board 104 is perpendicular, thus along axis z, to the surface 402a facing the window of a vehicle in a mounted state of the sensing device 400, which extends along axis x. Consequently, a first curved portion 412a of the interconnecting means 108 is formed next to the connection area 410.

Compared to the first embodiment, the housing 402 furthermore comprises an inwardly oriented protrusion 438 next to the opening 416 in the housing 402, on the inside side 402b of the housing 402. The cover 418 of the second embodiment comprises a protruding portion 420 comprising a guiding means 422 and a recess closing means 426 like the cover of the first embodiment. The guiding means 422 facing the protrusion 438 has, however, a different shape compared to the first embodiment. The extremity 422a is not rounded but has a concave shape mating the convex shape of the protrusion 438. Consequently, the interconnecting means 108 is sandwiched between the protrusion 438 and the guiding means 422 and forms a second loop 412b next to the first loop 412a.

Towards the second end portion 108b, the form and force-fit connection of the interconnecting means 108 is realized essentially the same way using the cover 418 and the housing 402. As a result, a third flexible curved portion 412c is formed like in the first embodiment.

However, the difference is that the second end portion 108b abuts against the cover 418 at a contact surface 444. The cover 418 further comprises a complementary form 456 with a protruding part 456a and a cut-out part 456b on its side wall 418c. When mounted, the cover 418 is positioned above the housing 402 so that its protruding part 456a abuts against the second end portion 108b of the flexible loop 412c at a contact surface 444, thereby blocking the flexible loop 412c against an upward movement, meaning a movement of the flexible loop 412c in the opposite direction to where the windshield is in contact with the sensor device 400 in the mounted state.

The recess closing means 426 has a rounded extremity 426a like in the first embodiment. The rounded extremity 426c of the recess closing means 426 abuts against the flexible loop 412c at the contact surface 434.

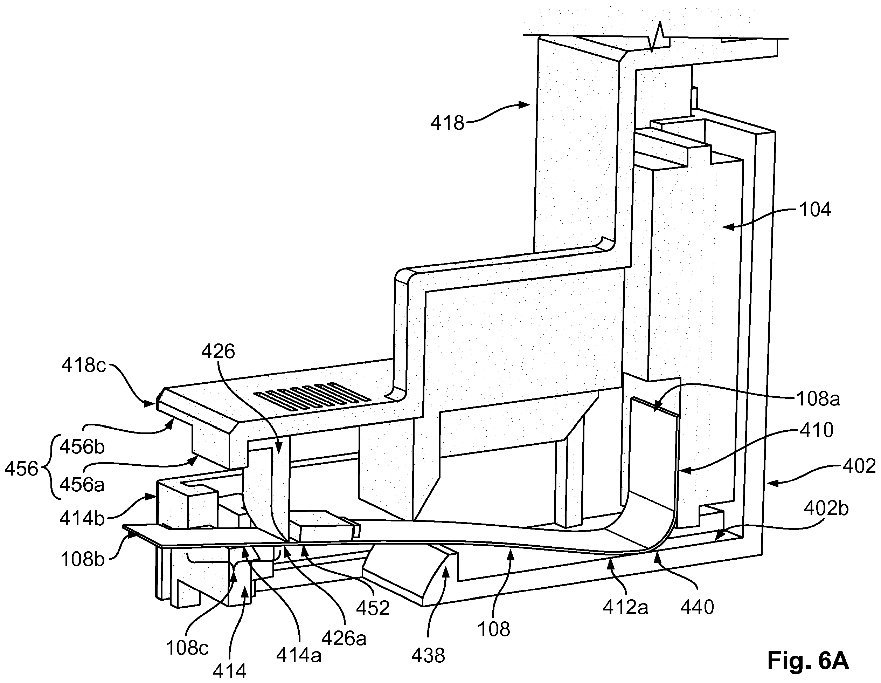

The guiding means 422 and the recess closing means 426 do not have the same dimensions. In figure 5, the recess closing means 426 is longer than the guiding means 422 in the Z direction, as will be explained later in Figure 6a.

In this embodiment, the dimension of the cover 418 is chosen such that the apex section 430b of the flexible curved portion 412b abuts against it at location 422.

Thus, according to the second embodiment of the invention and compared to the first embodiment, the flexible curved portion 412c is locked in position between the housing 402 and the cover 418 of the sensing device 400 at two more locations, namely at the positions 442 and 444.

Like in the first embodiment, the flexible curved portion 412c extends beyond the outer surface 402a of the housing 402 through an opening 416 in the housing 402. The other two flexible curved portions 412a and 412b of the interconnecting means 108 are located within the housing 402.

Like in the first embodiment, when the sensing device 400 is put in contact with a windshield, the flexible curved portion 412c is pressed onto the windshield via an elastic restoring force so that the at least one non-optical sensor 106 located at the apex 430c of the flexible curved portion 412c is in contact with the windshield. Due to the presence of the plurality of flexible curved portions, the elastic restoring force of the flexible curved portion 412c is however enhanced compared to the device 100 of the first embodiment.

According to a further embodiment, not shown, printed circuit board can be positioned like in the first embodiment, so that the the connection area 410 between the printed circuit board 104 and the interconnecting means 108 is parallel to the surface 402a. In this case, two flexible curved portions are formed instead of three. In the figures 6a to 6c, the mounting of the sensor into the housing will be described. Again, elements with reference numerals already used in the description of Figures 1a, 1b and 5a, 5b will not be described in detail again but reference is made thereto.

Figure 6a shows a cut of a three dimensional side view of the housing 402 and the interconnecting means 108 of the sensing device according to the second embodiment of the invention, before the interconnecting means 108 is shaped into a plurality of flexible curved portions. The cover 418 is not yet completely closing the housing 402.

As the cover 418 is not yet pushing onto the interconnecting means 108, only the first curved portion 412a has been formed due to the vertical arrangement of the connection 410 between the printed circuit board 104 and the first end portion 108a of the interconnecting means 108. The flexible curved portion 412a is in contact 440 with the inside surface 402b of the housing 402.

The interconnecting means 108 is positioned on the protruding section 438 and in contact 452 with the extremity 426a of the recess closing means 426 at the third portion 108c, towards the second end portion 108b.

The interconnecting means 108 is positioned so that the third portion 108c rests on the wall 414 of the housing 402 and the second end portion 108b extends outwardly of the interconnecting means holding wall 414 of the housing 402. Figure 6a also illustrates that the shape of the interconnecting means holding wall 414 is different compared to the first embodiment. It has a lower part 414a and a raised part 414b with respect to the surface 402a side of the housing 402 configured to be put into contact with a windshield. The lower part 414a receives the third portion 108c, whereas the raised part 414b is positioned to the side of the third portion 108c. The cover 418 has a complementary form 456 with a protruding part 456a mating the lower part 414a and a cut-out part 456b mating the raised part 414b.

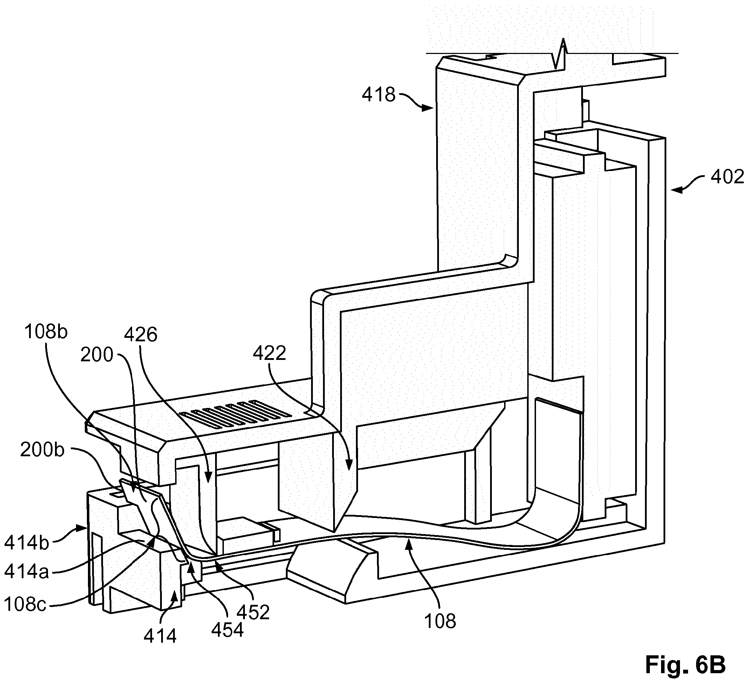

Figure 6b shows a cut of a three dimensional side view of the housing and the interconnecting means of the sensing device according to the second embodiment of the invention, in which compared to Figure 6a, the cover 418 has been pushed further down onto the housing 402.

As a consequence, a first bending 454 of the interconnecting means 108 at the level of the third portion 108c occurs, as the recess closing means 426 is in contact 452 with the interconnecting means 108. The third portion 108c rests on the wall 414 of the housing 402.

In addition, the edge 200b of the T bar 200 of the second end portion 108b is not positioned on the raised part 414b of the interconnecting means holding wall 414, whereas the third portion 108c has been lifted away from the lower part 414a.

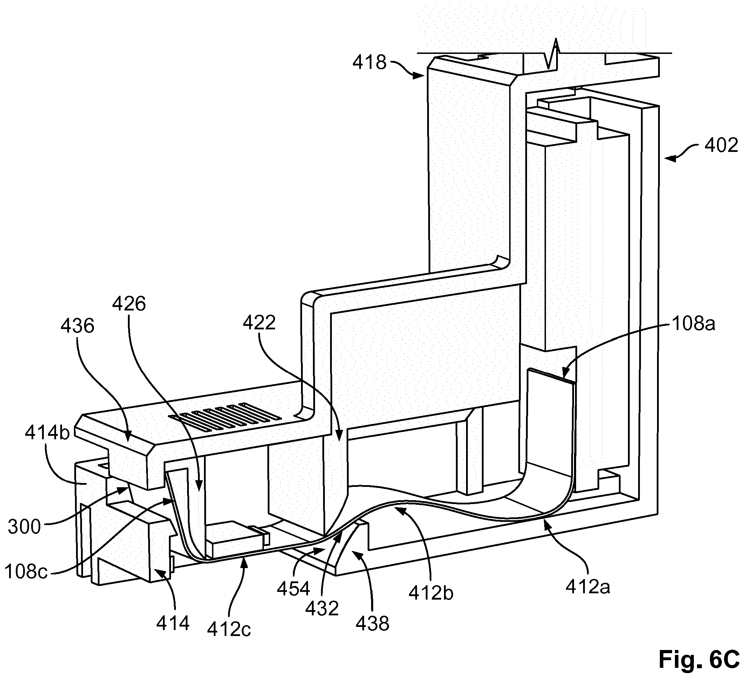

Figure 6c shows a cut of a three-dimensional side view of the housing 402 and the interconnecting means 108 of the sensing device according to the second embodiment of the invention, in which compared to Figure 6b, the cover 418 has been pushed further down onto the housing 402.

As a consequence, the guiding walls 422 of the cover 418 now also touches the interconnecting means 108 at the contact surface 432 and thereby the second and third flexible curved portions 412b, 412c are formed. A second bending 454 of the interconnecting means 108 takes place in between the guiding walls 422 and the protruding section 438 of the housing 402, resulting in the formation of the second and third flexible curved portions 412b, 412c.

At the contact surface 432, the interconnecting means 108 is sandwiched between the guiding means 422 and the protruding section 438 of the housing 402.

In addition, the T-bar 200 moves completely over the raised part 414b of the interconnecting means holding wall 414 so that it can move into the groove 406 (in the same manner as shown in figure 2b, see groove 206). The protruding part 436 of the cover 418 is in contact with the second end portion 108a of the interconnecting means 108 and pushed the flexible curved portion 412c down in the housing, so that when the cover 418 forms a form-fit connection with the housing 402, the flexible curved portion 412c extends beyond the outer surface 402a of the housing 402 through the opening 416 in the housing 402.

The sensing device 400 according to the invention comprises a flexible curved portion shaped interconnecting means 108 locked in position by the housing 402 and the cover 418 of the sensing device with an enhanced elastic restoring force which ensures a better contact between the windshield and the at least one non-optical sensor mounted in the flexible curved portion. The flexible curved portion can easily be pre-assembled within the housing of the sensing device to which results in a simplified assembly process of the sensing device.

A plurality of embodiments of the invention have been described. Nevertheless, it is understood that various modifications and enhancements may be made without departing the following claims.

### List of reference numbers

- 100: sensing device
- 102: housing
- 102a: surface facing window of vehicle
- 104: printed circuit board
- 104a: surface away from window
- 104b: surface facing window
- 106: non optical sensor
- 106a: temperature sensor
- 106b: humidity sensor
- 108: interconnecting means
- 108a: first end portion
- 108b: second end portion
- 108c: third portion
- 110: soldered connection
- 112: flexible curved portion shape
- 114: interconnecting means holding wall
- 116: opening in housing
- 118: cover
- 120: protruding portion
- 122: guiding means
- 122a: rounded shape
- 124: guiding means
- 126: recess closing means
- 126a: rounded shape
- 128: volume
- 130: apex portion
- 132: contact surface
- 134: contact surface
- 136: opening

- 200: T-bar
- 200a,b: edges of the T-bar
- 202: trunc section
- 204: recess
- 206: groove
- 208: bottom of the groove
- 210: slit

- 300: through hole
- 302: trunc section
- 302c: trunc section
- 304: recess
- 308: interconnecting means
- 308a: first end portion
- 308b: second end portion
- 308c: third portion
- 352: trunc section
- 358: interconnecting means
- 358a: first end portion
- 358b: second end portion
- 358c: third portion
- *w₁*: width of T-bar 200
- *w₂*: width of trunc section 202
- *w₃*: width of trunc section 302c
- *l*: length of trunc section
- *l₁*: length of trunc section 302c
- *l₃*: length of trunc section 352
- *d*: length of the T-bar
- *h*: hight of the housing 102

- 400: sensing device
- 402: housing
- 402a,b: bottom, top side
- 402c: external side wall
- 108a,b,c: first end, second end and third portion
- 410: direct soldered connection
- 412a, b, c: flexible curved portion
- 414: interconnecting means holding wall
- 414a: lower part
- 414b: raised part
- 416: opening in housing
- 418: cover
- 418a, b, c: bottom, top, lateral side of the cover
- 420: protruding section of the cover
- 422: guiding walls
- 422a: extremity of the guiding walls
- 422c: truncated side of the guiding walls
- 426: recess closing walls
- 426a: extremity of the recess closing walls
- 426c: truncated side of the recess closing walls
- 430a, b, c: apex of the flexible curved portion
- 432, 434: contact surface
- 438: protruding part of the housing
- 438c: truncated side of the protruding part
- 440, 442, 444: contact surface
- 446: protruding section of the cover
- 452: contact surface
- 454: bent of the interconnecting means
- 456: complementary form of the cover
- 456a: protruding part
- 456b: cut-out part

## Claims

1. A sensing device for a windshield comprising:
a housing (102, 402) comprising a printed circuit board (104);
at least one sensor (106); and
an interconnecting means (108, 308, 358) electrically connecting the at least one sensor (106) to the printed circuit board (104), wherein the interconnecting means (108) has the form of a flexible curved portion (112), a portion (130, 430c) of the flexible curved portion (112) being configured to be pressed onto the windshield when the sensing device is put in contact with the windshield;
the interconnecting means (108) having a first end portion (108a, 308a, 358a) and a second end portion (108b, 308b, 358b),
the first end portion (108a, 308a, 358a) of the interconnecting means (108, 308, 358) being connected to the printed circuit board (104), and
the second end portion (108b, 308b, 358b) of the interconnecting means (108, 308, 358) realises a form-fit and/or force-fit connection with a wall (114, 414) of the housing (102, 402) in at least one direction.

2. Sensing device according to claim 1, wherein the interconnecting means (108, 308, 358) comprises a third portion (108c, 308c, 358c) next to the second end portion (108b, 308b, 358b) comprising at least one cut out.

3. Sensing device according to claim 2, wherein the at least one cut out is a through hole (350) and/or a trunk section (202).

4. Sensing device according to any one of claims 1 to 3, wherein the housing (102, 402) comprises an interconnecting means holding wall (114, 414) wherein the wall (114, 414) comprises a recess (204, 404) through which the third portion (108c, 308c) of the interconnecting means (108) extends such that the second end portion (108b, 308b) is positioned on the one side of the recess (204, 404) and the remainder of the third portion (108c, 308c) of the interconnecting means (108, 308) is positioned on the other side of the recess (204, 304).

5. Sensing device according to claim 4, wherein the interconnecting means holding wall (114, 414) of the housing (102, 402) furthermore comprises a groove (206, 406), in particular a V-shaped groove, extending essentially sideward to the recess (204, 404) and along the holding wall (114, 414) for receiving the second end portion (108a, 308a) of the interconnecting means (108, 308).

6. Sensing device according to claim 5, wherein the bottom (208) of the groove (206) receives the edge (200a, 200b) of the second end portion (108a, 308a, 358a) towards the side of the third portion (108c, 308c, 358c) of the interconnecting means (108, 308, 358).

7. Sensing device according to any one the previous claims 5 or 6, wherein the bottom (208) of the groove (206) comprises an opening (136) via which the third portion (108c, 308c, 358c) of the curved portion (112) formed by the interconnecting means (108, 308, 358) extends beyond the housing (102).

8. Sensing device according to any one the previous claims 4 to 7, wherein the recess (204) is a slit (210) that extends through the entire height h of the wall (114) and essentially perpendicular to the surface (102a) side of the housing (102) configured to be put into contact with a windshield.

9. Sensing device according to claim 8, wherein the slit (210) is present only in one flank of the V shaped groove (206).

10. Sensing device according to any one the previous claims 4 to 9, wherein the recess (204) further comprises closing means (126, 426) for at least partially closing the recess (204) such that the flexible curved portion (112) remains beyond the outer surface (102a) of the housing (102).

11. Sensing device according to any one the previous claims 4 to 10, further comprising guiding means (122, 124, 422) for forcing the flexible curved portion (112, 412c) beyond the outer surface (102a, 402a) of the housing (102, 402), said guiding means (122, 124, 422) being positioned between the recess closing means (126, 426) and the printed circuit board (104).

12. Sensing device according to any one the previous claims 1 to 11, further comprising a cover (118, 418) closing the housing (102, 402), and realizing a form-fit connection with the housing (102, 402) in a second direction.

13. Sensing device according to claim 12, wherein the recess closing means (126, 426) and/or the guiding means (122, 124, 422) are part of the cover (118, 418) closing the housing (102, 402) from the side (102b, 402b) opposite to the side (102a, 402a) in contact with the windshield when mounted.

14. Sensing device according to any one of the previous claims 1 to 13, wherein the housing (402) and/or the cover (418) further comprises a plurality of protruding portions to shape the flexible interconnecting means (108, 308, 358) into a plurality of flexible curved portions (412a, 412b, 412c).

15. Sensing device according to the previous claim 14, wherein the housing (402) comprises a protruding section (438) next to the opening (416) of the housing (402) facing the guiding walls (422) of the cover (418) to sandwich the interconnecting means (108) between the housing (402) and the cover (418).

16. Sensing device according to any one of the previous claims 1 to 15, wherein at least one flexible curved portion (412b) is formed between the opening (416) of the housing (402) and the connection (410) of the first end portion (108a) of the interconnecting means (108) with the printed circuit board (104).

17. Sensing device according to any one of the previous claims 1 to 16, wherein the interconnecting means (108, 308, 358) has a shape of a succession of convex and concave curved portions.

18. Sensing device according to any one of the previous claims 1 to 17, wherein the area of the connection (410) between the printed circuit board (104) and the first end portion (108a, 308a) of the interconnecting means (108, 308) extends perpendicular to the surface (402a) side of the housing (402) configured to put into contact with a windshield.

19. Sensing device according to any one the previous claims 1 to 18, wherein a volume (128, 428) for receiving at least one sensor (106) is located between the recess closing means (126, 426) and the guiding means (122, 124, 422).

## Patentansprüche

1. Erfassungsvorrichtung für eine Windschutzscheibe, die umfasst:
ein Gehäuse (102, 402), das eine Leiterplatte (104) umfasst;
wenigstens einen Sensor (106); sowie
eine Verbindungseinrichtung (108, 308, 358), die den wenigstens einen Sensor (106) elektrisch mit der Leiterplatte (104) verbindet, wobei die Verbindungseinrichtung (108) die Form eines flexiblen gekrümmten Abschnitts (112) hat, ein Teil (130, 430c) des flexiblen gekrümmten Abschnitts (112) so ausgeführt ist, dass er auf die Windschutzscheibe gedrückt wird, wenn die Erfassungsvorrichtung in Kontakt mit der Windschutzscheibe gebracht wird;
die Verbindungseinrichtung (108) einen ersten Endabschnitt (108a, 308a, 358a) sowie einen zweiten Endabschnitt (108b, 308b, 358b) aufweist,
der erste Endabschnitt (108a, 308a, 358a) der Verbindungseinrichtung (108, 308, 358) mit der gedruckten Leiterplatte (104) verbunden ist, und
der zweite Endabschnitt (108b, 308b, 358b) der Verbindungseinrichtung (108, 308, 358) eine form- und/oder kraftschlüssige Verbindung mit einer Wand (114, 414) des Gehäuses (102, 402) in wenigstens einer Richtung herstellt.

2. Erfassungsvorrichtung nach Anspruch 1, wobei die Verbindungseinrichtung (108, 308, 358) einen dritten Abschnitt (108c, 308c, 358c) neben dem zweiten Endabschnitt (108b, 308b, 358b) umfasst, der wenigstens einen Ausschnitt umfasst.

3. Erfassungsvorrichtung nach Anspruch 2, wobei der wenigstens eine Ausschnitt ein Durchgangsloch (350) und/oder ein Schaft-Teilabschnitt (202) ist.

4. Erfassungsvorrichtung nach einem der Ansprüche 1 bis 3, wobei das Gehäuse (102, 402) eine die Verbindungseinrichtung haltende Wand (114, 414) umfasst, die Wand (114, 414) eine Aussparung (204, 404) aufweist, durch die sich der dritte Abschnitt (108c, 308c) der Verbindungseinrichtung (108) so erstreckt, dass der zweite Endabschnitt (108b, 308b) an der einen Seite der Aussparung (204, 404) positioniert ist und der verbleibende Teil des dritten Abschnitts (108c, 308c) der Verbindungseinrichtung (108, 308) an der anderen Seite der Aussparung (204, 304) positioniert ist.

5. Erfassungsvorrichtung nach Anspruch 4, wobei die die Verbindungseinrichtung haltende Wand (114, 414) des Gehäuses (102, 402) des Weiteren eine Nut (206, 406), insbesondere eine V-förmige Nut, umfasst, die sich im Wesentlichen seitwärts zu der Aussparung (204, 404) sowie entlang der haltenden Wand (114, 414) erstreckt und dazu dient, den zweiten Endabschnitt (108a, 308a) der Verbindungseinrichtung (108, 308) aufzunehmen.

6. Erfassungsvorrichtung nach Anspruch 5, wobei der Boden (208) der Nut (206) die Kante (200a, 200b) des zweiten Endabschnitts (108a, 308a, 358a) in Richtung der Seite des dritten Abschnitts (108c, 308c, 358c) der Verbindungseinrichtung (108, 308, 358) aufnimmt.

7. Erfassungsvorrichtung nach einem der vorangehenden Ansprüche 5 oder 6, wobei der Boden (208) der Nut (206) eine Öffnung (136) umfasst, über die sich der dritte Abschnitt (108c, 308c, 358c) des gekrümmten Abschnitts (112), der von der Verbindungseinrichtung (108, 308, 358) gebildet wird, über das Gehäuse (102) hinaus erstreckt.

8. Erfassungsvorrichtung nach einem der vorangehenden Ansprüche 4 bis 7, wobei die Aussparung (204) ein Schlitz (210) ist, der sich über die gesamte Höhe h der Wand (114) und im Wesentlichen senkrecht zu der Seite der Fläche (102a) des Gehäuses (102) erstreckt, die so ausgeführt ist, dass sie mit einer Windschutzscheibe in Kontakt gebracht wird.

9. Erfassungsvorrichtung nach Anspruch 8, wobei der Schlitz (210) nur in einer Flanke der V-förmigen Nut (206) vorhanden ist.

10. Erfassungsvorrichtung nach einem der vorangehenden Ansprüche 4 bis 9, wobei die Aussparung (204) des Weiteren eine Einrichtung (126, 426) zum Verschließen umfasst, die dazu dient, die Aussparung (204) wenigstens teilweise so zu verschließen, dass der flexible gekrümmte Abschnitt (112) außerhalb der Außenfläche (102a) des Gehäuses (102) verbleibt.

11. Erfassungsvorrichtung nach einem der vorangehenden Ansprüche 4 bis 10, die des Weiteren Führungseinrichtungen (122, 124, 422) umfasst, die dazu dienen, den flexiblen gekrümmten Abschnitt (112, 412c) über die Außenfläche (102a, 402a) des Gehäuses (102, 402) hinaus zu drücken, wobei die Führungseinrichtungen (122, 124, 422) zwischen der Einrichtung (126, 426) zum Verschließen der Aussparung und der Leiterplatte (104) positioniert sind.

12. Erfassungsvorrichtung nach einem der vorangehenden Ansprüche 1 bis 11, die des Weiteren eine Abdeckung (118, 418) umfasst, die das Gehäuse (102, 402) verschließt und eine formschlüssige Verbindung mit dem Gehäuse (102, 402) in einer zweiten Richtung herstellt.

13. Erfassungsvorrichtung nach Anspruch 12, wobei die Einrichtung (126, 426) zum Verschließen der Aussparung und/oder die Führungseinrichtungen (122, 124, 422) Teil der Abdeckung (118, 418) sind, die das Gehäuse (102, 402) von der Seite (102b, 402b) her verschließt, die der Seite (102a, 402a) gegenüberliegt, die in montiertem Zustand in Kontakt mit der Windschutzscheibe ist.

14. Erfassungsvorrichtung nach einem der vorangehenden Ansprüche 1 bis 13, wobei das Gehäuse (402) und/oder die Abdeckung (418) des Weiteren eine Vielzahl vorstehender Abschnitte umfassen/umfasst, die die flexible Verbindungseinrichtung (108, 308, 358) zu einer Vielzahl flexibler gekrümmter Abschnitte (412a, 412b, 412c) formt.

15. Erfassungsvorrichtung nach dem vorangehenden Anspruch 14, wobei das Gehäuse (402) einen vorstehenden Teilabschnitt (438) neben der Öffnung (416) des Gehäuses (402) umfasst, der den Führungswänden (422) der Abdeckung (418) zugewandt ist und die Verbindungseinrichtung (108) zwischen dem Gehäuse (402) und der Abdeckung (418) einschließt.

16. Erfassungsvorrichtung nach einem der vorangehenden Ansprüche 1 bis 15, wobei wenigstens ein flexibler gekrümmter Abschnitt (412b) zwischen der Öffnung (416) des Gehäuses (402) und der Verbindung (410) des ersten Endabschnitts (108a) der Verbindungseinrichtung (108) mit der Leiterplatte (104) ausgebildet ist.

17. Erfassungsvorrichtung nach einem der vorangehenden Ansprüche 1 bis 16, wobei die Verbindungseinrichtung (108, 308, 358) eine Form einer Abfolge konvex und konkav gekrümmter Abschnitte hat.

18. Erfassungsvorrichtung nach einem der vorangehenden Ansprüche 1 bis 17, wobei sich der Bereich der Verbindung (410) zwischen der Leiterplatte (104) und dem ersten Endabschnitt (108a, 308a) der Verbindungseinrichtung (108, 308) senkrecht zu der Seite der Fläche (402a) des Gehäuses (402) erstreckt, die so ausgeführt ist, dass sie mit einer Windschutzscheibe in Kontakt gebracht wird.

19. Erfassungsvorrichtung nach einem der vorangehenden Ansprüche 1 bis 18, wobei sich ein Raum (128, 428) zum Aufnehmen wenigstens eines Sensors (106) zwischen der Einrichtung (126, 426) zum Verschließen der Aussparung und den Führungseinrichtungen (122, 124, 422) befindet.

## Revendications

1. Dispositif de détection destiné à un pare-brise comprenant :
un boîtier (102, 402) comprenant une carte de circuits imprimés (104) ;
au moins un capteur (106) ; et
un moyen d'interconnexion (108, 308, 358) connectant électriquement l'au moins un capteur (106) à la carte de circuits imprimés (104), dans lequel le moyen d'interconnexion (108) présente la forme d'une partie incurvée flexible (112),
une partie (130, 430c) de la partie incurvée flexible (112) étant configurée pour être pressée contre le pare-brise lorsque le dispositif de détection est mis en contact avec le pare-brise ;
le moyen d'interconnexion (108) présentant une première partie d'extrémité (108a, 308a, 358a) et une deuxième partie d'extrémité (108b, 308b, 358b),
la première partie d'extrémité (108a, 308a, 358a) du moyen d'interconnexion (108, 308, 358) étant connectée à la carte de circuits imprimés (104), et
la deuxième partie d'extrémité (108b, 308b, 358b) du moyen d'interconnexion (108, 308, 358) établit une connexion par ajustage de forme et/ou force avec une paroi (114, 414) du boîtier (102, 402) dans au moins une direction.

2. Dispositif de détection selon la revendication 1, dans lequel le moyen d'interconnexion (108, 308, 358 ) comprend une troisième partie (108c, 308c, 358c) proche de la deuxième partie d'extrémité (108b, 308b, 358b) comprenant au moins une découpe.

3. Dispositif de détection selon la revendication 2, dans lequel l'au moins une découpe est un trou traversant (350) et/ou une section principale (202).

4. Dispositif de détection selon l'une quelconque des revendications 1 à 3, dans lequel le boîtier (102, 402) comprend une paroi de maintien de moyen d'interconnexion (114, 414) dans lequel la paroi (114, 414) comprend une cavité (204, 404) à travers laquelle la troisième partie (108c, 308c) du moyen d'interconnexion (108) s'étend de sorte que la deuxième partie d'extrémité (108b, 308b) soit positionnée sur l'un côté de la cavité (204, 404) et le reste de la troisième partie (108c, 308c) du moyen d'interconnexion (108, 308) est positionné sur l'autre côté de la cavité (204, 304).

5. Dispositif de détection selon la revendication 4, dans lequel la paroi de maintien de moyen d'interconnexion (114, 414) du boîtier (102, 402) comprend en outre une rainure (206, 406), en particulier une rainure en forme de V, s'étendant essentiellement de côté par rapport à la cavité (204, 404) et le long de la paroi de maintien (114, 414) pour accueillir la deuxième partie d'extrémité (108a, 308a) du moyen d'interconnexion (108, 308).

6. Dispositif de détection selon la revendication 5, dans lequel le fond (208) de la rainure (206) reçoit l'arête (200a, 200b) de la deuxième partie d'extrémité (108a, 308a, 358a) vers le côté de la troisième partie (108c, 308c, 358c) du moyen d'interconnexion (108, 308, 358) .

7. Dispositif de détection selon l'une quelconque des revendications précédentes 5 et 6, dans lequel le fond (208) de la rainure (206) comprend une ouverture (136) via laquelle la troisième partie (108c, 308c, 358c) de la partie incurvée (112) formée par le moyen d'interconnexion (108, 308, 358) s'étend au-delà du boîtier (102).

8. Dispositif de détection selon l'une quelconque des revendications précédentes 4 à 7, dans lequel la cavité (204) est une fente (210) qui s'étend sur toute la hauteur *h* de la paroi (114) et essentiellement perpendiculaire à la surface (102a) latérale du boîtier (102) configurée pour être mise en contact avec un pare-brise.

9. Dispositif de détection selon la revendication 8, dans lequel la fente (210) est présente uniquement sur un côté de la rainure en forme de V (206).

10. Dispositif de détection selon l'une quelconque des revendications précédentes 4 à 9, dans lequel la cavité (204) comprend en outre un moyen de fermeture (126, 426) pour fermer au moins partiellement la cavité (204) de sorte que la partie incurvée flexible (112) reste au-delà de la surface extérieure (102a) du boîtier (102).

11. Dispositif de détection selon l'une quelconque des revendications précédentes 4 à 10, comprenant en outre un moyen de guidage (122, 124, 422) pour forcer la partie incurvée flexible (112, 412c) au-delà de la surface extérieure (102a, 402a) du boîtier (102, 402), ledit moyen de guidage (122, 124, 422) étant positionné entre le moyen de fermeture de cavité (126, 426) et la carte de circuits imprimés (104).

12. Dispositif de détection selon l'une quelconque des revendications précédentes 1 à 11, comprenant en outre un capot (118, 418) fermant le boîtier (102, 402), et établissant une connexion par ajustage de forme avec le boîtier (102, 402) dans une deuxième direction.

13. Dispositif de détection selon la revendication 12, dans lequel le moyen de fermeture de cavité (126, 426) et/ou le moyen de guidage (122, 124, 422) font partie du capot (118, 418) fermant le boîtier (102, 402) depuis le côté (102b, 402b) opposé au côté (102a, 402a) en contact avec le pare-brise après montage.

14. Dispositif de détection selon l'une quelconque des revendications 1 à 13, dans lequel le boîtier (402) et/ou le capot (418) comprend en outre une pluralité de parties débordantes pour constituer une forme du moyen d'interconnexion flexible (108, 308, 358) dans une pluralité de parties incurvées flexibles (412a, 412b, 412c) .

15. Dispositif de détection selon la revendication précédente 14, dans lequel le boîtier (402) comprend une section débordante (438) à côté de l'ouverture (416) du boîtier (402) orientée vers les parois de guidage (422) du capot (418) pour prendre en sandwich le moyen d'interconnexion (108) entre le boîtier (402) et le capot (418).

16. Dispositif de détection selon l'une quelconque des revendications précédentes 1 à 15, dans lequel au moins une partie incurvée flexible (412b) est formée entre l'ouverture (416) du boîtier (402) et la connexion (410) de la première partie d'extrémité (108a) du moyen d'interconnexion (108) avec la carte de circuits imprimés (104).

17. Dispositif de détection selon l'une quelconque des revendications 1 à 16, dans lequel le moyen d'interconnexion (108, 308, 358) présente une forme d'une succession de parties incurvées convexes et concaves.

18. Dispositif de détection selon l'une quelconque des revendications précédentes 1 à 17, dans lequel la zone de connexion (410) entre la carte de circuits imprimés (104) et la première partie d'extrémité (108a, 308a) du moyen d'interconnexion (108, 308) s'étend perpendiculaire à la surface (402a) latérale du boîtier (402) configurée pour être mise en contact avec un pare-brise.

19. Dispositif de détection selon l'une quelconque des revendications précédentes 1 à 18, dans lequel un volume (128, 428) pour recevoir au moins un capteur (106) est situé entre le moyen de fermeture de cavité (126, 426) et le moyen de guidage (122, 124, 422).
